# EUROPEAN PATENT SPECIFICATION

(11) **EP 4 628 674 B1**
(45) Date of publication and mention of the grant of the patent: **08.04.2026**
(21) Application number: 25168582.2
(22) Date of filing: 04.04.2025
(51) Int. Cl.: E04F 11/00, F16B 2/02

(54) **RELEASABLE CLAMP**
LÖSBARE KLEMME
PINCE DE SERRAGE DÉTACHABLE

(30) Priority: 05.04.2024 GB 202404925
(43) Date of publication of application: 08.10.2025
(73) Proprietor: Easibathe Limited, Dunston Tyne & Wear NE11 9JR (GB)
(72) Inventor: BARRETT, David Ian, Dunston NE11 9JR (GB); PATTINSON, Paul Joseph, Dunston NE11 9JR (GB)
(74) Representative: Mathys & Squire

(56) References cited:
- KR-B1- 102 121 429
- US-A- 4 904 105

## Description

### Field of the Invention

The present invention relates to a releasable clamp and to a kit of parts for assembling an access ramp. The invention is particularly suitable, but by no means limited, for use during the assembly of access ramps/platforms.

### Background to the Invention

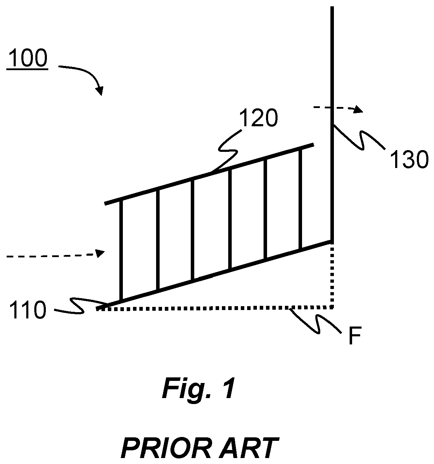

Access ramps/platforms, such as ramps which provide access to a building via a gradual incline/decline, are typically supplied in a modular manner for assembly onsite. Figure 1 illustrates one such module 100 for an access ramp, the module 100 comprising an inclined ramp portion 110 and a handle portion 120. The ramp portion 110 provides a walkway surface via which user can traverse (as indicated by dotted arrows) towards an access point 130. The user may grip the handle portion 120 for support, e.g., depending on weather conditions/the ability of the user, etc.

The walkway surface of the ramp portion 110, on which the user may traverse to reach the access point 130, is typically welded to a frame which supports the surface. The walkway surface is often provided in the form of a mesh. In some instances, the handle portion 120 is also welded to the frame, such that an entire module 100 can be prefabricated prior to installation on site. The prefabricated module 100 is then affixed to a frame F, thereby providing access to the access point 130.

However, such prefabricated modules are cumbersome to transport and to fit into position on site, often requiring a team of engineers and/or multiple vehicle loads of modules to erect a given access ramp.

If the support frame F (e.g. 40 mm angled section) is supplied separately to the walkway 110, it is often necessary to drill into the frame F to affix the walkway 110 thereto. By drilling into framework and into the walkway 110, several issues arise, such as:
- taking a substantial amount of time to drill all the required holes, dress and protect them, and then assemble all of the fasteners (e.g. nut and bolt type fasteners, which require access above and below the walkway to install);
- the protective finish provided on the access system's components is inherently damaged when drilling, and if subsequently dressed improperly (or not at all), this may lead to rusting and premature failure of these components (as well as providing an unsightly installation);
- the structural integrity of the frame/walkway could be impacted depending on the extent of drilling therethrough;
- if a walkway panel needs to be replaced, it may be difficult to reposition and replace because each panel could have a different mesh pattern placement (and hence the drilled holes to secure the walkway to the frame may fail to align);
- additional tools (often requiring power) are needed for assembly; and
- additional cleaning requirements to remove material ejected during drilling and any cutting oils used (particularly problematic in hospitals/other clean environments).

Additionally, once installed, there may be a need to access the volume underneath the walkway 110, e.g., to access unground pipework, or the like. If the access system was installed in a modular manner, entire modules need to be removed such that an engineer may access underneath each module. Again, this is time consuming and often requires a team of engineers to remove large and cumbersome modules.

Alternately, if the walkways are secured to the support frame separately, gaining access is still often difficult as fasteners (e.g. nuts/bolts) holding the walkway to the frame have often rusted and/or seized in place. Also, to access nut/bolt type fasteners, some engineers may reach underneath the frame F (which is unsafe) to use specialist tools to complete their tasks.

Moreover, in the case where the access platform is intended to be temporary, e.g. for outdoor concerts, sports events, or the like, installing and removing entire modules can be unduly cumbersome.

There is therefore a desire for a modular access ramp assembly system which addresses at least some of the above problems.

Background art is provided in US 4904105 A and KR 102121429 B1.

US 4904105 A discloses a tensioned grating fastener that includes a deep draft saddle clip of U-shaped configuration that is engagable with a pair of load-support bars of a criss-cross configurated grating, an elongated foot that is provided with a vertical upstanding headed stud which projects through a hole of the saddle clip and a coil spring that is concentrically mounted under slight compression about the stud between the head of the stud and the base of the saddle clip. The depression of the headed stud compresses the coil spring and permits the foot to be rotated from a position in alignment with the saddle clip to a position at an oblique angle thereto, such that one end of the foot is beneath and in engagement with a flange of an underlying grating support member, and the opposite end, beneath and in engagement with one parallel load-supporting bars of the grating. Release of the depressed headed stud partially relaxes the compressed coil spring while ensuring tensioning of the clip engaged grating against the support flange to overcome vibration of the assembly of the grating to the flanged support.

KR 102121429 B1 discloses a grating panel fixture. The grating panel fixture includes a clamp portion that is engaged with the support member, and a cap portion that grips the grating panel by being coupled to the clamp portion, wherein the clamp portion includes: an engaging space; upper and lower surfaces which are located to face each other on the upper side and the lower side of the engaging space; a locking member including a connecting portion connecting the rear ends of the upper and lower surfaces to each other; and fixing bolt having a separate fastening spiral for spirally coupling a spiral of an outer peripheral surface to the coupling hole formed on the upper surface and the lower end of the cap portion.

### Summary of the Invention

The present invention is set out in the appended independent claims. Optional features are set out in the appended dependent claims.

According to an example, a releasable clamp for releasably securing a walkway surface to a support frame is provided, the walkway surface being a first component and the support frame being a second component, the releasable clamp comprising: a first member, a second member, and a fastener configured to releasably secure the first member to the second member, the fastener comprising a first part and a second part, wherein the first member comprises: a portion for rotating the first member relative to a first surface of the first component and for exerting a force against the first component, and a shaft projecting along a longitudinal axis perpendicular to the portion for rotating the first member, wherein the shaft is configured to: receive the first part of the fastener along the longitudinal axis, pass through the first component in use, and locate the first member parallel to the first surface of the first component; wherein the second member comprises a receiving portion configured to: align longitudinally with the longitudinal axis and receive the shaft, and receive the second part of the fastener along the longitudinal axis, wherein the shaft and the receiving portion are configured to mutually engage, such that the second member rotates with rotation of the first member, wherein the first and second parts of the fastener are configured to mutually engage to secure the first member to the second member, and wherein the second member is configured to abut a second surface of the first component in use, wherein the second member further comprises a clamping portion projecting perpendicularly to the longitudinal axis, wherein the clamping portion is configured to abut a first surface of the second component when the first and second members are rotated into a securing position in use, and to exert a force to secure the second component against the first component as the first part of the fastener is tightened relative to the second part of the fastener in use.

Optionally, the releasable clamp's clamping portion may comprise a stepped portion configured to abut the first surface of the second component.

Optionally, the stepped portion may comprise a deformable material configured to deform against the first surface of the second component when the fastener is tightened.

Optionally, the deformable material may comprise a textured surface.

Optionally, the shaft may comprise a projection extending perpendicularly to the longitudinal axis configured to engage with the receiving portion.

Optionally, the shaft may be configured to engage with the receiving portion by means of a friction fit.

Optionally, a distal portion of the shaft may have a polygonal cross-section, and wherein the receiving portion has a corresponding polygonal cross-section for receiving the shaft. Optionally, the polygonal cross-section may be is square.

Optionally, the second part of the fastener may comprise a boss having a polygonal cross-section at a proximal end, and wherein the receiving portion may have a corresponding polygonal cross-section for receiving the boss, optionally employing a friction fit between the boss and the receiving portion.

Optionally, the polygonal cross-section of the second part of the fastener may be square.

Optionally, the first member may comprise a plurality of portions for rotating the first member.

Optionally, the plurality of portions for rotating the first member may be disposed radially from and perpendicular to the longitudinal axis.

Optionally, the first and second members may be formed from recyclable plastic.

Optionally, the fastener may be formed as a coach bolt.

According to another example, a releasable clamp for releasably securing a walkway surface to a support frame is provided, the walkway surface being a first component and the support frame being a second component, the releasable clamp comprising: a first member, a second member, and a fastener configured to releasably secure the first member to the second member, the fastener comprising a first part and a second part, wherein the first member comprises: a portion for rotating the first member relative to a first surface of the first component and for exerting a force against the first component, and a receiving portion for receiving the first part of the fastener; wherein the second member comprises: a shaft projecting along a longitudinal axis perpendicular to the portion for rotating the first member; wherein the shaft is configured to: receive the second part of the fastener along the longitudinal axis, pass through the first component in use, and locate the first member parallel to the first surface of the first component; wherein the shaft and the receiving portion are configured to mutually engage, such that the second member rotates with rotation of the first member, wherein the first and second parts of the fastener are configured to mutually engage to secure the first member to the second member, and wherein the second member is configured to abut a second surface of the first component in use, wherein the second member further comprises a clamping portion projecting perpendicularly to the longitudinal axis, wherein the clamping portion is configured to abut a first surface of the second component when the first and second members are rotated into a securing position in use, and to exert a force to secure the second component against the first component as the first part of the fastener is tightened relative to the second part of the fastener in use.

Another example discloses a kit which comprises the releasable clamp described above, a walkway surface being the first component, and a support frame for the walkway surface being the second component.

Each feature disclosed in this specification (which term includes the claims) and/or shown in the drawings may be incorporated in the invention independently (or in combination with) any other disclosed and/or illustrated features. In particular but without limitation the features of any of the claims dependent from a particular independent claim may be introduced into that independent claim in any combination or individually.

### Brief Description of the Drawings

The invention will now be described by way of example only with reference to the attached figures in which:
Figure 1 is a schematic illustration of a modular portion for an access ramp;
Figure 2 is a schematic exploded illustration of the components of a releasable clamp for securing a walkway surface to a support frame;
Figure 3a is a perspective exploded illustration of a walkway into which releasable clamps have been installed and a support frame onto which the walkway is offered for installation;
Figure 3b is a perspective illustration of a walkway into which releasable clamps have been installed and a support frame onto which the walkway has been offered for installation;
Figure 4a shows a reverse (underside) view of the walkway and support frame shown in Figure 3b, with a clamping portion of the releasable fastener being positioned inward of the walkway;
Figure 4b schematically illustrates the rotational force applied to the releasable clamps to facilitate the securing of the walkway to the support frame;
Figure 5a shows the reverse (underside) view of the walkway and support frame shown in Figure 4a, with the clamping portions having been rotated into a securing position which abuts the support frame;
Figure 5b shows a profile cutaway view of the releasable clamp securing the walkway to the support frame;
Figure 6a shows a profile cutaway view of the releasable clamp securing the walkway to the support frame; and
Figure 6b shows a profile cutaway view of a releasable clamp according to another example securing the walkway to the support frame.

In the figures, like elements are indicated by like reference numerals throughout.

### Detailed Description of Preferred Embodiments

The present embodiments represent the best ways known to the Applicant of putting the invention into practice. However, they are not the only ways in which this can be achieved.

### Releasable Clamp

To overcome disadvantages with current modular access ramp systems, the present work discloses the use of a releasable clamp for fastening components of an access ramp/platform together.

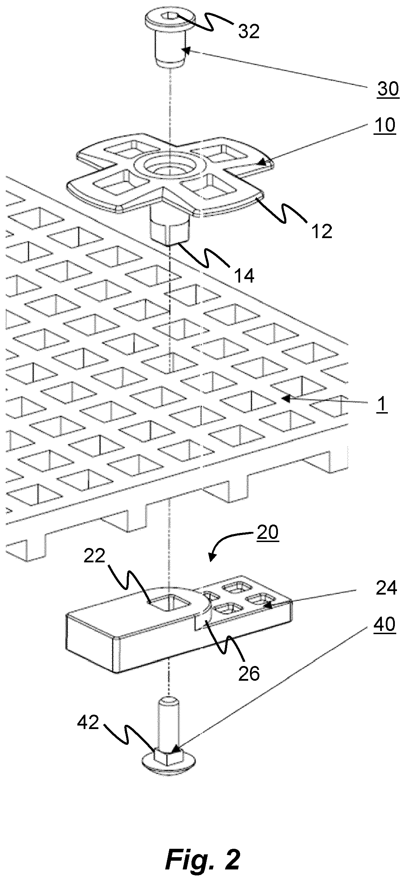

Reference is now made to Figure 2, which illustrates the components of a releasable clamp for securing a walkway surface to a support frame. As discussed in greater detail below, the walkway surface is an example of a first component and the support frame is an example of a second component. The present releasable clamp is suitable for releasably clamping such first and second components together. Many other examples of such first and second components are envisaged, as discussed below. Typically, the first and second components are heavy duty engineering products that may be used both outdoors or indoors.

As illustrated in Figure 2, the releasable clamp comprises a first member 10, a second member 20 and a fastener comprising a first part 30 and a second part 40 for releasably securing the first member 10 and second member 20 either side of a walkway surface 1 (hence sandwiching the walkway surface 1 between the first and second members 10, 20).

The first member 10 comprises a user-grippable portion 12 for rotating the first member 10 relative to a first surface of the walkway 1 (i.e., the surface of the walkway 1 which is visible in Figure 2). This portion 12 is configured to exert a force against the walkway surface 1 when the releasable fastener is tightened, as explained in more detail below. In the illustrated example, the user-grippable portion 12 comprises a plurality of lugs (in this case, four), although one or more lugs 12 may alternatively be provided as needed. The first member 10 also comprises a shaft 14 projecting along a longitudinal axis perpendicular to the portion 12 for rotating the first member 10 (as indicated by the dashed line in Figure 2).

The shaft 14 is configured to receive the first part 30 of the fastener along the longitudinal axis, and to locate the first member 10 (in particular, the user-grippable portion 12 thereof) parallel to the walkway surface, as well as to pass through the walkway surface. In the illustrated example, the walkway 1 is a mesh, such as a Glass-Reinforced-Plastic (GRP) mesh bearing a non-slip surface over which a user traverses (this mesh is sometimes referred to as waffle), comprising an array of square holes (or holes of other polygonal shapes, or circular holes).

As various sizes of holes through meshes are available (e.g. apertures in the range of 15 mm to 50 mm, with some specific sizes of apertures being 15mm, 25 mm, 38 mm and 50 mm) the shaft 14 is respectively sized to fit therethrough in use, thereby locating the first member 10 parallel to the walkway surface. The shaft 14 is shaped to receive the first part 30 of the releasable clamp's fastener. In the illustrated example, the shaft 14 is substantially cylindrical to receive the substantially cylindrical first part 30 of the fastener, although it will be appreciated that alternative conformations of shaft 14 and fastener portion 30 may be used instead (e.g. polygonal).

The shaft 14 of the first member 10 is also configured to be received at a receiving portion 22 of the releasable fastener's second member 20, which is disposed parallel to - and is configured to abut the underside of - the walkway surface. The receiving portion 22 is aligned longitudinally with the longitudinal axis illustrated in Figure 2, and, in addition to receiving the shaft 14 (with the first part 30 of the fastener therein), is also configured to receive the second part 40 of the fastener along the longitudinal axis.

Specifically, the shaft 14 and the receiving portion 22 are configured to mutually engage with one another, such that the second member 20 rotates with rotation of the first member 10 as the user rotates the lugs 12 (a discussion regarding the reasons for rotating these members is described in detail below). These lugs 12 for rotating the first member 10 may be disposed radially from and perpendicular to the longitudinal axis indicated by the dotted line in Figure 2.

Additionally, the one or more lugs 10 may each be tapered in a proximal-to-distal direction such that the surface of the first member 10 does not stand unduly proud of the walkway surface, and hence assists a user to traverse over the walkway surface e.g., for wheeled devices, such as wheelchairs, wheelbarrows, etc., as well as reduce the risk of a user tripping over the surface of the first member 10.

In the illustrated example, the distal end of the shaft 14 is square-shaped to be received by corresponding receiving portion 22, and thereby the shaft 14 and the receiving portion 22 mutually form an interference/friction fit and engage with one another. Beneficially, such engagement avoids the first and second members parting from one another whilst the releasable clamp is being assembled, as well as causing the second member 20 to rotate with rotation of the first member 10 (as noted above and explained in more detail below). Of course, it will be appreciated that alternative means of engaging the shaft 14 to the receiving portion 22 may be used instead, e.g., other polygonally-shaped mating features, etc.

Once the first and second members 10, 20 are engaged, the first part 30 and second part 40 of the fastener may be mutually engaged and tightened together to secure the first member 10 to the second member 20. In the illustrated example, the fastener is a coach bolt, with the female part of the coach bolt corresponding to the first part 30 of the fastener, and the male part of the coach bolt corresponding to the second part of the fastener 40 (although it will be appreciated that alternative fasteners to the described coach bolt may be used to secure the first and second members 10, 20 together).

The first part 30 may bear a fastening portion 32 for receiving a bit, such as a hex (Allen) key, and the second part 40 may bear a protrusion 42 (sometimes referred to as a boss) which is correspondingly shaped according to the shape of the receiving portion 22 (e.g. polygonally shaped, such as square-shaped). As the protrusion 42 is configured to engage with the receiving portion 22 (e.g. via an interference fit caused by the respective components mating), rotational forces about the second part 40 of the fastener may be constrained, and hence a user applying rotational force via the securing portion 32 tightens both parts 30, 40 of the fastener together. The underside of the receiving portion 22 is also shaped to receive the second part 40 of the fastener, which, in the illustrated example, corresponds to the hemispherical portion 26.

The second member 20 further comprises a clamping portion 24 which projects perpendicularly to the longitudinal axis illustrated with the dashed line in Figure 2.

The clamping portion 24 is configured to abut against a support frame (not illustrated) when the first and second members are rotated into a securing position in use, and to exert a force to secure the second component 20 against the walkway 1 as the first part 30 of the fastener is tightened relative to the second part 40 of the fastener, as will be discussed in detail below.

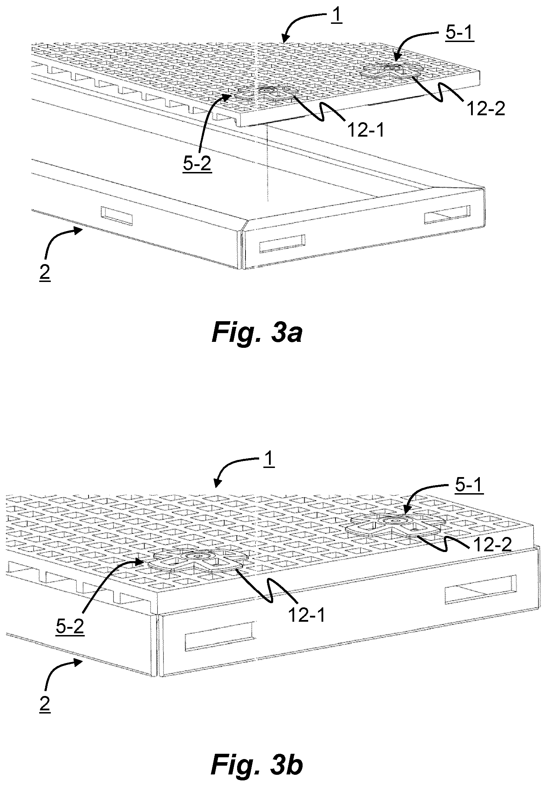

Reference is now made to Figure 3a, which illustrates in perspective view a section of walkway 1 to be secured to a support frame 2 via two releasable clamps 5-1, 5-2 which have been detailed above. The support frame 2 may be manufactured from 40 mm angle section (having an "L" shape). As illustrated, the support frame 2 may comprise one or more slots for attaching the support frame 2 to other entities (e.g. another section of support frame, or a wall, etc.).

As illustrated, the support frame 2 has been constructed without the need for the walkway to be preconnected/welded thereto (as is required by many current modular ramp systems). Accordingly, the installation of the support frame 2 is more procedurally straightforward, and also the fitter may access the internal space defined by the boundary of the support frame 2 (e.g. stand inside the support frame 2) making installation thereof even easier relative to current access systems.

With the walkway 1 being separate from the support frame 2, each releasable clamp 5 is assembled by firstly pushing the first member 10 through an opening in the mesh walkway surface panel 1, using the shaft 14 as a means for locating the first member 10 parallel to the walkway 1. The shaft 14 is then mated with the receiving portion 22 of the second member 20, which is disposed on the opposite side of the walkway surface relative to the first member 10, in the manner described above.

To complete this stage of the assembly of the releasable fastener 5, the first part 30 of the coach bolt is inserted into the shaft 14 of the first member 10 and loosely tightened into the second part 40 of the coach bolt, which is held via the boss 42 against the receiving portion 22 of the second member 20. As the first and second members 10, 20 have been mated, and the coach bolt fastener 30, 40 only loosely tightened, when a user rotates the lugs 12 projecting from the first member 10 the applied rotational force is transmitted to the second member 20, causing the first and second members 10, 20 to rotate as one.

This procedure of attaching releasable fasteners 5 to the walkway 1 is then repeated as many times as needed to provide a sufficient number of releasable fasteners 5 for securing a given walkway 1 to a support frame 2.

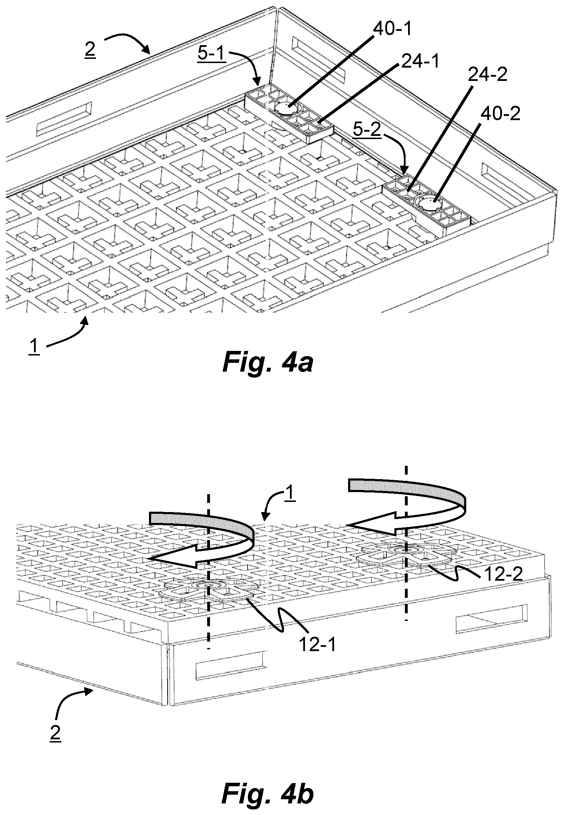

Once the releasable fasteners 5 have been installed onto the walkway surface 1, the walkway surface 1 is offered up to the support frame 2, as shown in Figure 3b. At this time, the installer ensures that the clamping portion 24-1, 24-2 of each releasable clamp 5-1, 5-2 is positioned inboard of the walkway surface 1 (as illustrated in Figure 4a). This is facilitated by the installer being able to see through the mesh of the walkway surface 1, and by using guides which may be provided on the lugs 12-1, 12-2 (e.g. by providing apertures through the lugs 10 which correspond to the shape of the apertures in the mesh walkway surface 1, as illustrated in Figure 3b).

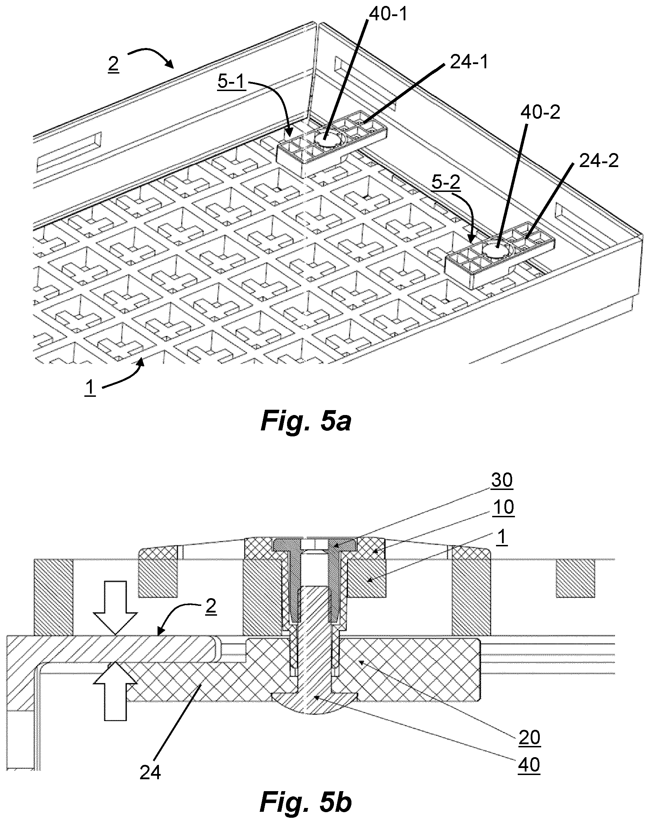

Then, the installer rotates the first member 10 by hand, e.g. by rotating the lugs 12, or by inserting a tool into the lugs 12 and rotating the tool, about the longitudinal axis (as illustrated with dotted lines in Figure 4b). The rotational force is transmitted to the second member 20 via the shaft 14 of the first member 10, and hence the clamping portion 24 is rotated into a position which abuts against a portion of the support frame 2 as shown in Figure 5a.

Once the clamping portion 24 is in position, abutting against the securing surface of the support frame 2, the first part 30 of the coach bolt may then be tightened further, either by hand or by use of a power tool, relative to the second part 40 of the coach bolt. As shown with reference to Figure 5b, this tightening reduces the distance between the first member 10 and second member 20 and exerts a compressive force between the first and second members 10, 20, the walkway 1, and the support frame 2. More particularly, the first member 10 secures against a top surface of the walkway 1, whilst the second member 20 secures against a bottom surface of the walkway 1 as well as against the securing surface of the support frame 2 (as indicated by the large opposing arrows in Figure 5b).

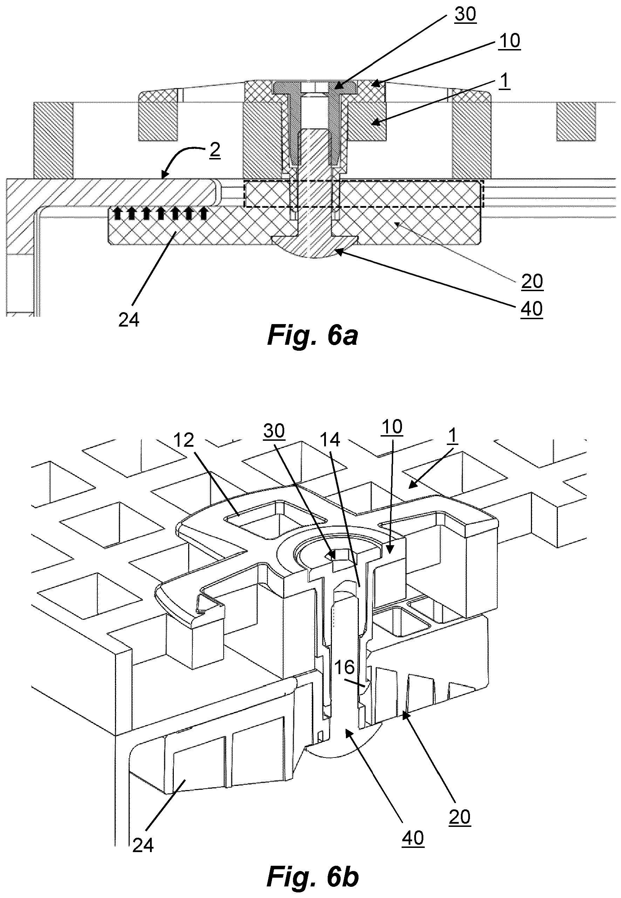

Figure 6a shows in more detail the compressive securing forces which are applied by the second member 20 of the releasable fastener to the walkway 1 and the support frame 2. Specifically, as illustrated with a dashed box, the second member 20 evenly distributes its securing force across the underside surface of the walkway 1. Similarly, and as illustrated with multiple emboldened arrows, the coupling portion 24 also evenly distributes its securing force across the securing surface of the support frame 2. This force may be spread more evenly over the securing surface of the support frame 2 by the coupling portion 24 comprising a stepped portion at the interface between these components (the depth of the step corresponding to the thickness of the securing portion of the support frame 2).

Accordingly, the releasable clamp 5 provides a vice-like effect clamping the support frame 2 and the walkway 1 between the first and second members 10, 20.

To further spread force between the securing surface of the support frame 2 and the stepped portion of the coupling portion 24 in use (i.e. to maximise the surface contact between the coupling portion 24 and the support frame 2), the stepped portion may comprise a deformable material (such as rubber, or the like) configured to deform against the securing surface of the support frame 2 when the fastener is tightened. The deformable material may have a textured surface (e.g., the deformable material may be engineered as ribbed or knurled, etc.), to better facilitate frictional forces between the securing surface of the support frame 2 and the stepped portion of the coupling portion 24 when the fastener is tightened.

If the walkway 1 needs to be removed from the support frame 2, a user need only slacken the first part 30 of the coach bolt, and rotate the first member 10 such that the coupling portion 24 is moved inward of the walkway 1, prior to removal of the walkway 1 from the support frame 2.

Beneficially, therefore, by using the releasable fastener 5 described herein, an installer can install and remove walkway 1 onto a support frame 2 without needing to access both sides of the walkway 1 simultaneously (as is required when installing with typical bolt and nut fasteners). Hence, there is no need for a fitter to carry large modules of a modular access system over a site, nor need to reach underneath the support frame 2 during an installation/removal process of the walkway surface.

The releasable fastener described herein is also reusable, and hence more environmentally friendly than current access systems which may need to be cut and rewelded, for example. Moreover, the first and second members may be formed from recyclable plastic, which is both advantageous from an environmental perspective as well as from a robustness perspective, as these members will not rust like their traditional all-metal counterparts.

### Further Embodiment

In the above-described embodiment, the first member 10 comprises a shaft 14 for mating with the receiving portion 22 of the second member. However, it will be appreciated that, as a further embodiment, the second member 20 may instead comprise the shaft 14 for mating with a receiving portion provided on the first member 10. In all other respects, this further embodiment shares the features of the above-described embodiment.

### Modifications and Alternatives

Detailed examples have been described above. As those skilled in the art will appreciate, a number of modifications and alternatives can be made to the above examples within the scope of the appended claims.

Referring now to Figure 6b, instead of the shaft 14 forming a friction fit (in other words an interference fit) with the receiving portion 22 as described with respect to the example above, the shaft 14 may instead comprise a projection 16 extending perpendicularly to the longitudinal axis which is configured to engage with the receiving portion 22. This projection, such as a tab/lip which engages with an edge of the receiving portion 22 to hold the first member 10 positively against the second member 20 (e.g. in the manner of a latch mechanism), thereby ensures that the first and second members 10, 20 do not separate unintentionally from one another during assembly of the releasable clamp.

Examples have been described above which relate to access systems for gaining access to/egressing from a building. However, the present examples need not be limited to use in such scenarios, as these examples may be applicable to a wide range of fields. Such fields include securing walkways in the offshore industry (e.g. oil rig platforms), or for rigging stage lighting and/or speakers, or for use as temporary access surfaces for outdoor concerts or sporting events, etc.

Whilst the above example has described a "walkway" surface, it will be appreciated that this term should be given its broadest interpretation. For example, the walkway surface may be suitable for use by wheeled devices. Alternatively, if the releasable clamp, walkway surface and support frame are manufactured from material with sufficient strength, large and heavy entities, e.g. vehicles, may use the access system (e.g. as temporary bridges, or the like).

Meshes for the walkway surface, such as GRP meshes bearing a non-slip surface, have been described above. However, it will be appreciated that other meshes, such as those manufactured from metals, metal alloys, composites, or the like, may instead be used with the releasable fastener of the present invention.

## Claims

1. A releasable clamp (5) for releasably securing a walkway surface (1) to a support frame (2), the walkway surface (1) being a first component (1) and the support frame (2) being a second component (2), the releasable clamp (5) comprising:
a first member (10),
a second member (20), and
a fastener configured to releasably secure the first member (10) to the second member (20), the fastener comprising a first part (30) and a second part (40),
wherein the first member (10) comprises:
a portion (12) for rotating the first member (10) relative to a first surface of the first component (1) and for exerting a force against the first component (1), and
a shaft (14) projecting along a longitudinal axis perpendicular to the portion (12) for rotating the first member (10),
wherein the shaft (14) is configured to:
receive the first part (30) of the fastener along the longitudinal axis,
pass through the first component (1) in use, and
locate the first member (10) parallel to the first surface of the first component (1);
wherein the second member (20) comprises a receiving portion (22) configured to:
align longitudinally with the longitudinal axis,
wherein the shaft (14) and the receiving portion (22) are configured to mutually engage, such that the second member (20) rotates with rotation of the first member (10),
wherein the first and second parts (30, 40) of the fastener are configured to mutually engage to secure the first member (10) to the second member (20), and
wherein the second member (20) is configured to abut a second surface of the first component (1) in use, wherein the second member (20) further comprises a clamping portion (24) projecting perpendicularly to the longitudinal axis, wherein the clamping portion (24) is configured to abut a first surface of the second component (2) when the first and second members (10, 20) are rotated into a securing position in use, and to exert a force to secure the second component (2) against the first component (1) as the first part (30) of the fastener is tightened relative to the second part (40) of the fastener in use,
**characterised in that** the receiving portion (22) of the second member (20) is configured to:
receive the shaft (14), and
receive the second part (40) of the fastener along the longitudinal axis.

2. The releasable clamp according to claim 1, wherein the clamping portion (24) comprises a stepped portion configured to abut the first surface of the second component (2).

3. The releasable clamp according to claim 2, wherein the stepped portion comprises a deformable material configured to deform against the first surface of the second component (2) when the fastener is tightened;
optionally wherein the deformable material comprises a textured surface.

4. The releasable clamp according to any preceding claim, wherein the shaft (14) comprises a projection (16) extending perpendicularly to the longitudinal axis configured to engage with the receiving portion (22).

5. The releasable clamp according to any of claims 1 to 3, wherein the shaft (14) is configured to engage with the receiving portion (22) by means of a friction fit - in other words by means of an interference fit.

6. The releasable clamp according to any preceding claim, wherein a distal portion of the shaft (14) has a polygonal cross-section, and wherein the receiving portion (22) has a corresponding polygonal cross-section for receiving the shaft (14).

7. The releasable clamp according to claim 6, wherein the polygonal cross-section is square.

8. The releasable clamp according to any preceding claim, wherein the second part (40) of the fastener comprises a boss (42) having a polygonal cross-section at a proximal end, and wherein the receiving portion (22) has a corresponding polygonal cross-section for receiving the boss (42), optionally employing a friction fit between the boss (42) and the receiving portion (22).

9. The releasable clamp according to claim 8, wherein the polygonal cross-section of the second part (40) of the fastener is square.

10. The releasable clamp according to any preceding claim, wherein the first member (10) comprises a plurality of portions (12) for rotating the first member (10).

11. The releasable clamp according to claim 10, wherein the plurality of portions (12) for rotating the first member (10) are disposed radially from and perpendicular to the longitudinal axis.

12. The releasable clamp according to any preceding claim, wherein the first and second members (10, 20) are formed from recyclable plastic.

13. The releasable clamp according to any preceding claim, wherein the fastener is formed as a coach bolt.

14. A releasable clamp (5) for releasably securing a walkway surface (1) to a support frame (2), the walkway surface (1) being a first component (1) and the support frame (2) being a second component (2), the releasable clamp (5) comprising:
a first member (10),
a second member (20), and
a fastener configured to releasably secure the first member (10) to the second member (20), the fastener comprising a first part (30) and a second part (40),
wherein the first member (10) comprises:
a portion (12) for rotating the first member relative to a first surface of the first component (1) and for exerting a force against the first component (1), and
a receiving portion for receiving the first part of the fastener;
wherein the second member (20) comprises:
a shaft projecting along a longitudinal axis perpendicular to the portion for rotating the first member;
wherein the shaft is configured to:
receive the second part (40) of the fastener along the longitudinal axis,
pass through the first component (1) in use, and
locate the first member parallel to the first surface of the first component (1);
wherein the first and second parts (30, 40) of the fastener are configured to mutually engage to secure the first member to the second member, and
wherein the second member (20) further comprises a clamping portion (24) projecting perpendicularly to the longitudinal axis, wherein the clamping portion (24) is configured to abut a first surface of the second component (2) when the first and second members (10, 20) are rotated into a securing position in use, and to exert a force to secure the second component (2) against the first component (1) as the first part (30) of the fastener is tightened relative to the second part (40) of the fastener in use,
**characterised in that**:
the shaft and the receiving portion are configured to mutually engage, such that the second member (20) rotates with rotation of the first member (10); and
the second member (20) is configured to abut a second surface of the first component (1) in use.

15. A kit comprising:
the releasable clamp (5) of any of claims 1 to 14,
a walkway surface (1) being the first component (1), and
a support frame (2) for the walkway surface being the second component (2).

## Patentansprüche

1. Lösbare Klemme (5) zum lösbaren Befestigen einer Gehwegfläche (1) an einem Tragrahmen (2), wobei die Gehwegfläche (1) eine erste Komponente (1) und der Tragrahmen (2) eine zweite Komponente (2) ist, wobei die lösbare Klemme (5) Folgendes umfasst:
ein erstes Element (10),
ein zweites Element (20) und
ein Befestigungselement, das zum lösbaren Befestigen des ersten Elements (10) am zweiten Elements (20) konfiguriert ist, wobei das Befestigungselement einen ersten Teil (30) und einen zweiten Teil (40) umfasst,
wobei das erste Element (10) Folgendes umfasst:
einen Abschnitt (12) zum Drehen des ersten Elements (10) relativ zu einer ersten Fläche der ersten Komponente (1) und zum Ausüben einer Kraft gegen die erste Komponente (1), und
einen Schaft (14), der entlang einer Längsachse lotrecht zu dem Abschnitt (12) zum Drehen des ersten Elements (10) vorsteht,
wobei der Schaft (14) konfiguriert ist zum:
Aufnehmen des ersten Teils (30) des Befestigungselements entlang der Längsachse,
Passieren durch die erste Komponente (1) beim Gebrauch und
Positionieren des ersten Elements (10) parallel zur ersten Fläche der ersten Komponente (1);
wobei das zweite Element (20) einen Aufnahmeabschnitt (22) umfasst, konfiguriert zum:
longitudinalen Ausrichten mit der Längsachse,
wobei der Schaft (14) und der Aufnahmeabschnitt (22) zum Ineinandergreifen konfiguriert sind, so dass sich das zweite Element (20) mit der Drehung des ersten Elements (10) dreht,
wobei der erste und zweite Teil (30, 40) des Befestigungselements zum Ineinandergreifen konfiguriert sind, um das erste Element (10) am zweiten Element (20) zu befestigen, und
wobei das zweite Element (20) zum Anliegen an einer zweiten Fläche der ersten Komponente (1) beim Gebrauch konfiguriert ist, wobei das zweite Element (20) ferner einen Klemmabschnitt (24) umfasst, der lotrecht zur Längsachse vorsteht, wobei der Klemmabschnitt (24) zum Anliegen an einer ersten Fläche der zweiten Komponente (2), wenn das erste und zweite Element (10, 20) beim Gebrauch in eine Befestigungsposition gedreht werden, und zum Ausüben einer Kraft konfiguriert ist, um die zweite Komponente (2) an der ersten Komponente (1) zu befestigen, wenn der erste Teil (30) des Befestigungselements relativ zum zweiten Teil (40) des Befestigungselements beim Gebrauch festgezogen wird,
**dadurch gekennzeichnet, dass** der Aufnahmeabschnitt (22) des zweiten Elements (20) konfiguriert ist zum:
Aufnehmen des Schafts (14) und
Aufnehmen des zweiten Teils (40) des Befestigungselements entlang der Längsachse.

2. Lösbare Klemme nach Anspruch 1, wobei der Klemmabschnitt (24) einen abgestuften Abschnitt umfasst, der zum Anliegen an der ersten Fläche der zweiten Komponente (2) konfiguriert ist.

3. Lösbare Klemme nach Anspruch 2, wobei der abgestufte Abschnitt ein verformbares Material umfasst, das zum Verformen gegen die erste Fläche der zweiten Komponente (2) konfiguriert ist, wenn das Befestigungselement festgezogen wird;
wobei das verformbare Material optional eine strukturierte Fläche aufweist.

4. Lösbare Klemme nach einem vorherigen Anspruch, wobei der Schaft (14) einen Vorsprung (16) aufweist, der sich lotrecht zur Längsachse erstreckt und zum Eingreifen in den Aufnahmeabschnitt (22) konfiguriert ist.

5. Lösbare Klemme nach einem der Ansprüche 1 bis 3, wobei der Schaft (14) zum Eingreifen in den Aufnahmeabschnitt (22) mittels einer Reibungspassung - mit anderen Worten mittels einer Presspassung - konfiguriert ist.

6. Lösbare Klemme nach einem vorherigen Anspruch, wobei ein distaler Abschnitt des Schafts (14) einen polygonalen Querschnitt hat und wobei der Aufnahmeabschnitt (22) einen entsprechenden polygonalen Querschnitt zum Aufnehmen des Schafts (14) hat.

7. Lösbare Klemme nach Anspruch 6, wobei der polygonale Querschnitt quadratisch ist.

8. Lösbare Klemme nach einem vorherigen Anspruch, wobei der zweite Teil (40) des Befestigungselements einen Ansatz (42) mit einem polygonalen Querschnitt an einem proximalen Ende hat und wobei der Aufnahmeabschnitt (22) einen entsprechenden polygonalen Querschnitt zur Aufnahme des Ansatzes (42) aufweist, wobei optional eine Reibungspassung zwischen dem Ansatz (42) und dem Aufnahmeabschnitt (22) verwendet wird.

9. Lösbare Klemme nach Anspruch 8, wobei der polygonale Querschnitt des zweiten Teils (40) des Befestigungselements quadratisch ist.

10. Lösbare Klemme nach einem vorherigen Anspruch, wobei das erste Element (10) mehrere Abschnitte (12) zum Drehen des ersten Elements (10) umfasst.

11. Lösbare Klemme nach Anspruch 10, wobei die mehreren Abschnitte (12) zum Drehen des ersten Elements (10) radial von und lotrecht zu der Längsachse angeordnet sind.

12. Lösbare Klemme nach einem vorherigen Anspruch, wobei das erste und zweite Element (10, 20) aus recycelbarem Kunststoff gebildet sind.

13. Lösbare Klemme nach einem vorherigen Anspruch, wobei das Befestigungselement als Schlossschraube ausgebildet ist.

14. Lösbare Klemme (5) zum lösbaren Befestigen einer Gehwegfläche (1) an einem Tragrahmen (2), wobei die Gehwegfläche (1) eine erste Komponente (1) und der Tragrahmen (2) eine zweite Komponente (2) ist, wobei die lösbare Klemme (5) Folgendes umfasst:
ein erstes Element (10),
ein zweites Element (20) und
ein Befestigungselement, das zum lösbaren Befestigen des ersten Elements (10) am zweiten Elements (20) konfiguriert ist, wobei das Befestigungselement einen ersten Teil (30) und einen zweiten Teil (40) umfasst,
wobei das erste Element (10) Folgendes umfasst:
einen Abschnitt (12) zum Drehen des ersten Elements relativ zu einer ersten Fläche der ersten Komponente (1) und zum Ausüben einer Kraft gegen die erste Komponente (1), und
einen Aufnahmeabschnitt zum Aufnehmen des ersten Teils des Befestigungsmittels;
wobei das zweite Element (20) Folgendes umfasst:
einen Schaft, der entlang einer Längsachse lotrecht zu dem Abschnitt zum Drehen des ersten Elements vorsteht,
wobei der Schaft konfiguriert ist zum:
Aufnehmen des zweiten Teils (40) des Befestigungselements entlang der Längsachse,
Passieren durch die erste Komponente (1) beim Gebrauch und
Positionieren des ersten Elements parallel zur ersten Fläche der ersten Komponente (1);
wobei der erste und zweite Teil (30, 40) des Befestigungselements zum Ineinandergreifen konfiguriert sind, um das erste Element am zweiten Element zu befestigen, und
wobei das zweite Element (20) einen Klemmabschnitt (24) umfasst, der lotrecht zur Längsachse vorsteht, wobei der Klemmabschnitt (24) zum Anliegen an einer ersten Fläche der zweiten Komponente (2), wenn das erste und zweite Element (10, 20) beim Gebrauch in eine Befestigungsposition gedreht werden, und zum Ausüben einer Kraft konfiguriert ist, um die zweite Komponente (2) gegen die erste Komponente (1) zu befestigen, wenn der erste Teil (30) des Befestigungselements beim Gebrauch relativ zum zweiten Teil (40) des Befestigungselements festgezogen wird,
**dadurch gekennzeichnet, dass**:
der Schaft und der Aufnahmeabschnitt zum Ineinandergreifen konfiguriert sind, so dass sich das zweite Element (20) mit der Drehung des ersten Elements (10) dreht; und
das zweite Element (20) zum Anliegen an einer zweiten Fläche der ersten Komponente (1) beim Gebrauch konfiguriert ist.

15. Bausatz, der Folgendes umfasst:
die lösbare Klemme (5) nach einem der Ansprüche 1 bis 14,
eine Gehwegfläche (1) als die erste Komponente (1) und
einen Tragrahmen (2) für die Gehwegfläche als die zweite Komponente (2).

## Revendications

1. Bride amovible (5) permettant de fixer de manière amovible une surface de passerelle (1) à un cadre de support (2), la surface de passerelle (1) étant un premier composant (1) et le cadre de support (2) étant un second composant (2), la bride amovible (5) comprenant :
un premier élément (10),
un second élément (20), et
une attache configurée pour fixer de manière amovible le premier élément (10) au second élément (20), l'attache comprenant une première partie (30) et une seconde partie (40),
dans laquelle le premier élément (10) comprend :
une partie (12) pour faire tourner le premier élément (10) par rapport à une première surface du premier composant (1) et pour exercer une force contre le premier composant (1), et
un arbre (14) faisant saillie le long d'un axe longitudinal perpendiculaire à la partie (12) pour faire tourner le premier élément (10),
dans laquelle l'arbre (14) est configuré pour :
recevoir la première partie (30) de l'attache le long de l'axe longitudinal,
traverser le premier composant (1) lors de l'utilisation, et
placer le premier élément (10) parallèlement à la première surface du premier composant (1) ;
dans laquelle le second élément (20) comprend une partie de réception (22) configurée pour :
s'aligner longitudinalement avec l'axe longitudinal,
dans laquelle l'arbre (14) et la partie de réception (22) sont configurés pour s'engager mutuellement, de sorte que le second élément (20) tourne avec la rotation du premier élément (10),
dans laquelle la première et la seconde partie (30, 40) de l'attache sont configurées pour s'engager mutuellement pour fixer le premier élément (10) au second élément (20), et
dans laquelle le second élément (20) est configuré pour venir buter contre une seconde surface du premier composant (1) lors de l'utilisation, dans laquelle le second élément (20) comprend en outre une partie de serrage (24) faisant saillie perpendiculairement à l'axe longitudinal, dans laquelle la partie de serrage (24) est configurée pour venir buter contre une première surface du second composant (2) lorsque les premier et second éléments (10, 20) sont tournés dans une position de fixation lors de l'utilisation, et pour exercer une force pour fixer le second composant (2) contre le premier composant (1) lorsque la première partie (30) de l'attache est serrée par rapport à la seconde partie (40) de l'attache lors de l'utilisation,
caractérisée en ce la partie de réception (22) du second élément (20) est configurée pour :
recevoir l'arbre (14), et
recevoir la seconde partie (40) de l'attache le long de l'axe longitudinal.

2. Bride amovible selon la revendication 1, dans laquelle la partie de serrage (24) comprend une partie étagée configurée pour venir buter contre la première surface du second composant (2).

3. Bride amovible selon la revendication 2, dans laquelle la partie étagée comprend un matériau déformable configuré pour se déformer contre la première surface du second composant (2) lorsque l'attache est serrée ;
optionnellement dans laquelle le matériau déformable comprend une surface texturée.

4. Bride amovible selon une quelconque revendication précédente, dans laquelle l'arbre (14) comprend une partie saillante (16) s'étendant perpendiculairement à l'axe longitudinal, configurée pour s'engager dans la partie de réception (22).

5. Bride amovible selon l'une quelconque des revendications 1 à 3, dans laquelle l'arbre (14) est configuré pour s'engager avec la partie de réception (22) au moyen d'un ajustement par friction - en d'autres termes, au moyen d'un ajustement avec serrage.

6. Bride amovible selon une quelconque revendication précédente, dans laquelle une partie distale de l'arbre (14) a une section transversale polygonale, et dans laquelle la partie de réception (22) a une section transversale polygonale correspondante pour recevoir l'arbre (14).

7. Bride amovible selon la revendication 6, dans laquelle la section polygonale est carrée.

8. Bride amovible selon une quelconque revendication précédente, dans laquelle la seconde partie (40) de l'attache comprend un bossage (42) ayant une section polygonale à une extrémité proximale, et dans laquelle la partie de réception (22) a une section polygonale correspondante pour recevoir le bossage (42), employant optionnellement un ajustement par friction entre le bossage (42) et la partie de réception (22).

9. Bride amovible selon la revendication 8, dans laquelle la section polygonale de la seconde partie (40) de l'attache est carrée.

10. Bride amovible selon une quelconque revendication précédente, dans laquelle le premier élément (10) comprend une pluralité de parties (12) pour faire tourner le premier élément (10).

11. Bride amovible selon la revendication 10, dans laquelle la pluralité de parties (12) pour faire tourner le premier élément (10) est disposée radialement par rapport à l'axe longitudinal et perpendiculairement à celui-ci.

12. Bride amovible selon une quelconque revendication précédente, dans laquelle les premier et second éléments (10, 20) sont formés de plastique recyclable.

13. Bride amovible selon une quelconque revendication précédente, dans laquelle l'attache se présente sous la forme d'un boulon carrossier.

14. Bride amovible (5) pour fixer de manière amovible une surface de passerelle (1) à un cadre de support (2), la surface de passerelle (1) étant un premier composant (1) et le cadre de support (2) étant un second composant (2), la bride amovible (5) comprenant :
un premier élément (10),
un second élément (20), et
une attache configurée pour fixer de manière amovible le premier élément (10) au second élément (20), l'attache comprenant une première partie (30) et une seconde partie (40),
dans laquelle le premier élément (10) comprend :
une partie (12) pour faire tourner le premier élément par rapport à une première surface du premier composant (1) et pour exercer une force contre le premier composant (1), et
une partie de réception pour recevoir la première partie de l'attache ;
dans laquelle le second élément (20) comprend :
un arbre faisant saillie le long d'un axe longitudinal perpendiculaire à la partie pour faire tourner le premier élément,
dans laquelle l'arbre est configuré pour :
recevoir la seconde partie (40) de l'attache le long de l'axe longitudinal,
traverser le premier composant (1) lors de l'utilisation, et
placer le premier élément parallèlement à la première surface du premier composant (1) ;
dans laquelle la première et la seconde partie (30, 40) de l'attache sont configurées pour s'engager mutuellement pour fixer le premier élément au second élément, et
dans laquelle le second élément (20) comprend en outre une partie de serrage (24) faisant saillie perpendiculairement à l'axe longitudinal, dans laquelle la partie de serrage (24) est configurée pour venir buter contre une première surface du second composant (2) lorsque les premier et second éléments (10, 20) sont tournés dans une position de fixation lors de l'utilisation, et pour exercer une force pour fixer le second composant (2) contre le premier composant (1) lorsque la première partie (30) de l'attache est serrée par rapport à la seconde partie (40) de l'attache lors de l'utilisation,
**caractérisée en ce que** :
l'arbre et la partie de réception sont configurés pour s'engager mutuellement, de sorte que le second élément (20) tourne avec la rotation du premier élément (10), et
le second élément (20) est configuré pour venir buter contre une seconde surface du premier composant (1) lors de l'utilisation.

15. Kit comprenant :
la bride amovible (5) selon l'une quelconque des revendications 1 à 14,
une surface de passerelle (1) constituant le premier élément (1), et
un cadre de support (2) pour la surface de passerelle, constituant le second élément (2).
